# EUROPEAN PATENT SPECIFICATION

(11) **EP 3 118 101 B1**
(45) Date of publication and mention of the grant of the patent: **12.09.2018**
(21) Application number: 16179014.2
(22) Date of filing: 12.07.2016
(51) Int. Cl.: B63B 43/18, G01S 17/02, G01S 17/42, G01S 17/93, G01S 7/481, G08G 1/16, G01S 7/48, G08G 3/02

(54) **WARNING DEVICE ADAPTED FOR PLACEMENT ON A VEHICLE FOR OBSTACLES LOCATED ABOVE THE ROUTE OF THE VEHICLE**
WARNVORRICHTUNG, ZUR PLATZIERUNG AUF EINEM FAHRZEUG, FÜR HINDERNISSE AUF DER ROUTE DES FAHRZEUGS
DISPOSITIF D'AVERTISSEMENT, CONÇU POUR ÊTRE PLACÉ SUR UN VÉHICULE, POUR DES OBSTACLES SITUÉS AU-DESSUS DE L'ITINÉRAIRE DU VÉHICULE

(30) Priority: 14.07.2015 NL 2015166
(43) Date of publication of application: 18.01.2017
(73) Proprietor: Sensor Beheer B.V., 5151 DP Drunen (NL)
(72) Inventor: Giezenberg, Johannes Andreas Jacobus, 5251 EL Vlijmen (NL)
(74) Representative: Patentwerk B.V.

(56) References cited:
- NL-C- 2 011 587
- US-A- 6 034 764
- US-A1- 2010 282 942
- US-B1- 8 810 382

## Description

The invention relates to a warning device adapted for placing on a vehicle for warning of obstacles located above the route of the vehicle.
The invention relates in particular to a device of this type, comprising a transmitter for transmitting electromagnetic signals propagating along a straight line in a vertical area which extends in the direction of movement of the vehicle, a receiver for receiving the signals reflected by an obstacle and computing means connected to the transmitter and to the receiver for determining the presence of the obstacle from a relationship between the transmitted and reflected signals and, in the event of determined presence of the obstacle, determining the height of the underside of the obstacle in relation to the vehicle.

A device of this type is known from Dutch patent NL-C-2011587.
This document describes a mirror for deflecting the beam of light. This mirror is integrated into the transmitter. In order to enable precise measurement, the angle at which the mirror is located must be precisely determined during the transmission of the beam of light. This results in a cumbersome structure, since it must be incorporated into the transmitter. Furthermore, a receiver is used here which is configured to receive beams of light from different directions.

The present invention, as defined by apparatus claim 1 and method claim 11, attempts to provide a simpler structure with which the angle can nevertheless be determined with high precision.
This object is achieved by a device of the aforementioned type, wherein the transmitter and the receiver are placed together on a platform which is pivotable around a horizontal axle in relation to a base which is to be connected to the vehicle, the device is provided with a pivoting device for the repeated pivoting of the platform through a limited angle around its axle, and wherein at least one angle sensor is fitted to determine the pivot angle of the platform and the computing means are connected to the angle sensor.

As a consequence of these measures, the at least one angle sensor can be placed completely outside the transmitter, so that high-precision angle sensors can readily be used.

The invention also relates to a method for determining the presence and the position of obstacles located above the route of a vehicle and for warning for those obstacles, comprising the transmission of an electromagnetic signal propagating in a straight line in a vertical area in the direction of movement of the vehicle, the reception of a signal reflected by the obstacles and the determination of the presence of an obstacle from the relationship between the transmitted signal and a reflected signal and, in the event of determined presence of the obstacle, the determination of the height of the obstacle in relation to the vehicle, characterized in that the transmitter and the receiver together perform a pivoting movement around a horizontal axle, said pivoting movement is repeated through a limited range and the pivot angle is determined.

Although other forms of penetrating radiation are not excluded, in order to render the precision as high as possible, the transmitter is preferably configured to transmit signals in the form of signals incorporated into a laser beam, and the receiver is configured to receive laser beams. Laser beams in fact have a small divergence.

The computing means are preferably configured for the repeated performance of a pivoting movement of the platform and are configured to calculate the position of the reflecting obstacle in relation to the ship from the angular position of the transmitter and the distance between the transmitter and the obstacle. Through this measure, the receiver no longer needs to be configured to receive beams of light from different directions, but is always aimed in the direction of the reflecting beam of light, as a result of which sensitivity and therefore precision can be increased.

If the vehicle approaches an obstacle located above its route, the angle between the horizontal and the line between the transmitter and the obstacle increases. In order to then also be able to clearly perceive the obstacle, the computing means are preferably configured, following the determination of the presence of an obstacle, to increase the pivot angle on approaching the obstacle.

This embodiment also provides a method of this type wherein, following the determination of the presence of an obstacle, the pivot angle is increased on approaching the obstacle.

In order to carry out a measurement, the angle between the horizontal and the transmitted or reflected beam of light must be determined as precisely as possible. To do this, the sensor preferably comprises an angle sensor connected to the platform and the base which is configured to measure the angle between the platform and the base.

In order to increase stability, the sensor comprises a gyroscopic sensor placed on the platform which is configured to measure the angle between the platform and the horizontal.

In order to even further increase precision, according to a different preferred embodiment, the sensor comprises both a gyroscopic sensor placed on the platform and an angle sensor connected to the platform and the base which is configured to measure the angle between the platform and the base, and the computing means are configured to combine the signals from the angle sensor and the gyroscopic sensor.

This embodiment also provides a method of the aforementioned type, wherein, during the transmission and reception of the beam of light, the position of the transmitter and the receiver is determined by two position sensors and the signals originating from both sensors are combined.

It is furthermore preferable for the device to be configured to emit a warning signal if the tallest height of the vehicle is taller than the vertical clearance of an obstacle located on the route of the vehicle.

According to a different preferred embodiment, the device is configured to emit different warning signals depending on the distance between the ship and the bridge.

The route of the vehicle occasionally comprises bends. Since the device according to the invention always measures straight ahead, it may occur that a warning is emitted for an obstacle which is not located on the route, since the route comprises a bend. In order to prevent 'false' warnings caused as a result, the device is preferably provided with a GPS unit which is connected to the computing means and the computing means are configured, following the determination of the presence of an obstacle, to investigate whether the obstacle is actually located on the route and to issue a warning only if the obstacle is actually located on the route.

This embodiment also produces a method of this type, wherein, following the determination of the presence of an obstacle, it is investigated with reference to a digital map whether the obstacle is actually located on the route and a warning is issued only if the obstacle is actually located on the route.

In order to be able to update the digital map, it is desirable for the GPS unit to be provided with a digital map which is provided with data of obstacles and this device is configured to adapt the data of obstacles.

An important field of application of the invention concerns waterborne transportation, in particular inland navigation. The device is then also preferably configured for placement on a ship, in particular a barge, and is configured to determine the vertical clearance of bridges.

The invention also relates to a ship, in particular a barge, provided with a device of the aforementioned type.

Since the device according to the invention is usually located in the vicinity of the wheelhouse, it is preferable for the computing means to be configured to calculate the distance between the bow of the ship and the obstacle.

Ships are sometimes provided with a wheelhouse placed on a variable-height support. In such cases, it is preferable for the wheelhouse to be provided with a position sensor to measure the height of the wheelhouse, for the position sensor to be connected to a computing means and for the computing means to be configured to measure the height of the wheelhouse.

Another field of application concerns trucks. They occasionally get stuck under viaducts. To prevent this, the device is then also preferably configured for placement on a truck and is configured to determine the height of underpasses such as viaducts.

The invention also relates to a truck, provided with a device of the aforementioned type.

The invention will now be explained with reference to the attached figures, in which:
Figure 1: shows a schematic side view, partially as a sectional view of a ship, a waterway and a bridge, to explain the invention;
Figure 2: shows a perspective view of a detail of an embodiment;
Figure 3: shows a block diagram of the embodiment shown in Figure 2;
Figure 4: shows a perspective view of the embodiment shown in Figures 2 and 3; and
Figure 5: shows a representation of a map to explain an alternative embodiment.

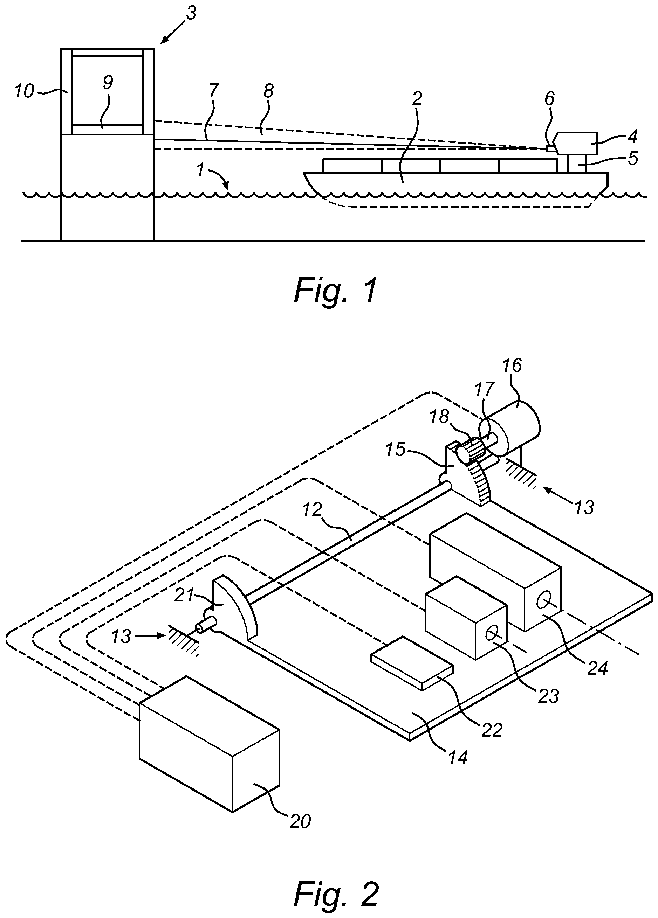

Figure 1 shows a waterway, for example a canal 1, in which a barge 2 is sailing and over which a bridge 3 is located. The ship 2 is a container ship and is provided with a wheelhouse 4 which is placed on a height-adjustable support 5 and the height of the wheelhouse 4 is adjustable so that the boatmaster in the wheelhouse 4 can see over the containers placed on the ship 2 and, if the ship 2 passes under a bridge, the wheelhouse 4 can be lowered. In the situation outlined, the wheelhouse 4 is higher than the vertical clearance of the bridge 3, so that the ship 2 will collide with the bridge 3 if it passes through without further action. Experience has shown that accidents of this type frequently occur and cause a lot of damage. The present invention attempts to avoid accidents of this type. It should be noted that, in the present case, the wheelhouse 4 is height-adjustable, but the invention also applies to ships 2 with a wheelhouse 4 with a fixed height or to ships in which a different part of the wheelhouse 4, such as the chimney or the mast, is the highest part.

The invention provides a device 6 for measuring the vertical clearance of the bridge 3 located along the route of the ship 2. In Figure 1, the device 6 is placed on the support 5 under the level of the wheelhouse 4, but it is also possible to place the device 6 in a different position on the ship, for example on the wheelhouse 4, or even close to the bow of the ship 2. It is essential that the device has an unobstructed line of sight in the forward direction of the ship 2. The bridge 3 is provided with a bridge deck 9 and two supporting arches 10. The height of the underside of the bridge deck 7 above the water surface, also known as the vertical clearance, is relevant to the occurrence of collisions.

The device 6 according to the invention is then also configured to transmit a beam 8 propagating in a straight line and performing a backward and forward movement within a vertical area. The beam 8 describes a circular sector in a vertical area. If the beam 8 strikes an obstacle, it is reflected by the obstacle in a manner known per se from the field of radar. In contrast to radar which is normally optimized for greater distances and for detecting larger bodies, the present invention uses separate pulse-shaped signals which are emitted in each case in a single, but variable, direction. However, other forms of distance measurement, for example by transmitting a continuous beam which is provided with regular markings, are not excluded. The signals transmitted in the direction of the ship and reflected are picked up by the device, and the device calculates the difference between the device and the obstacle from the time difference between the transmission and the reception of the signals.

Figure 2 shows important parts of the device according to the invention. The device comprises a platform 14 which is connected by means of an axle 12 to a base 13 and is pivotable around the axle 12. A toothed rim sector 15 and an electric motor 16, on the outgoing axle 17 of which a gear wheel 18 which engages with the teeth of the toothed rim sector 15 is placed, are used to drive the pivoting movement. A multi-pole motor is preferably used here. It is furthermore also possible for the motor to be connected directly to the axle. The device furthermore comprises a computing and control device 20 which is connected to the motor 16 to control the motor. An angle sensor 21 which generates a signal which is a measure of the angle of the platform 14 in relation to the base 13 is furthermore disposed between the platform 14 and the base. The angle sensor is also connected to the computing and control device 20. A gyroscopic angle sensor 22, which is also connected to the computing and control device 20, is disposed on the platform 14.

Finally, a laser transmitter 23 is fitted on the platform, together with a laser receiver 24. The laser transmitter and receiver 23, 24 are placed as close as possible to one another in order to ensure that the angle between the beam transmitted by the laser transmitter 23 and the beam received by the laser receiver 24 is as narrow as possible. It is furthermore also possible to place the laser transmitter and receiver 23, 24 on top of one another or, if a semi-transparent mirror, for example, is used, to integrate the transmitter and receiver into one another.

When the device 6 is activated, the computing and control device 20 activates the laser transmitter 23 and laser receiver 24 and controls the motor 16 in such a way that the platform 14 performs a repeating upward and downward movement. The angle sensor 21 and the gyroscopic sensor 22 are also activated. The signals from the sensors are fed to the computing and control device 20 for processing.

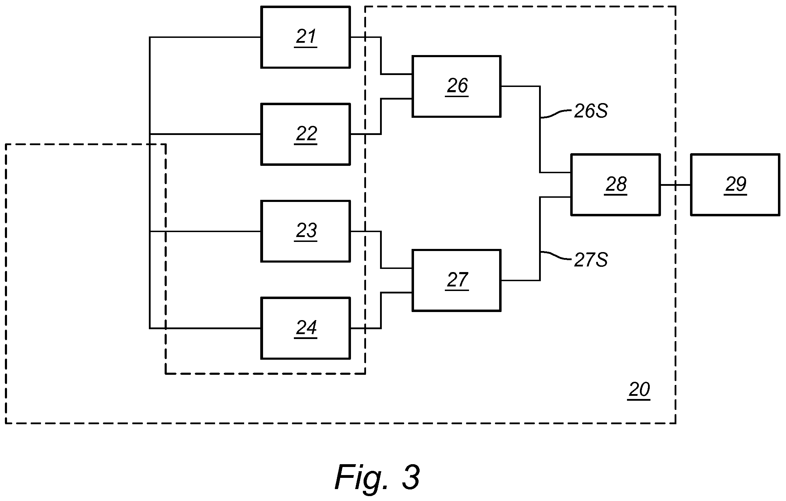

The computing and control device 20 is shown in more detail in the block diagram in Figure 3. The angle sensor 21 and the gyroscopic sensor 22 are both connected to a combination switch 26 which is configured to generate a signal 26S clearly representing the angle between the platform 14 and the horizontal. The output signals from the laser transmitter 23 and the laser receiver 24 are fed to a comparison circuit 27, wherein the distance between the laser source/receiver 23, 24 and the reflecting obstacle 3 is calculated from the time difference between the transmission of a laser pulse by the transmission circuit 23 and the reception of the reflected laser pulse by the reception circuit 24. This distance is encoded into an output signal 27S. The signals 26S and 27S are fed to a goniometric circuit 28 which calculates the height of the obstacle and the distance between the device 6 and the obstacle 5 from the distance and the angle. If the height of the obstacle is less than or equal to the maximum height of the ship, a signal is sent to a warning element 29, together with a signal representing the distance. The warning element is configured to emit an audible and/or visual signal, so that the boatmaster is warned and can stop the ship or reduce the height of the ship, for example by striking the mast, tipping the chimney or lowering the wheelhouse. The intensity of the audible or visual signal is preferably increased on approaching the obstacle. The control circuit 20, the circumference of which is shown by broken lines, is furthermore provided with a control circuit to control the angle sensor 21, the gyroscopic sensor 22, the laser transmitter 23 and the laser receiver 24. It will be clear to the person skilled in the art that the device is provided with a power supply circuit to supply power to the

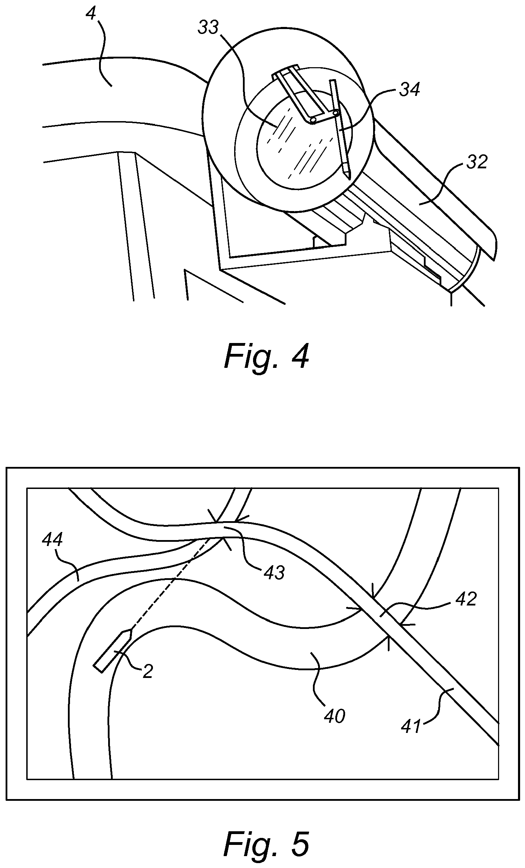

Figure 4 shows a housing 32 of a device 6. The housing has an essentially cylindrical shape, is made of metal, such as aluminium, and is provided on the front side with a window 33 which is optically neutral in relation to light of the wavelength concerned, to allow the laser beam 8 to pass through. The embodiment shown is itself provided with a windshield wiper 34.

The drawing also shows how the housing 6 is attached to a sidewall of a wheelhouse 4 of a barge 2. The device is connected by means of cables (not shown in the drawing) to the ship's power supply system and the output signals are fed via a cable to warning means placed inside and/or outside the wheelhouse.

Figure 5 shows a map of the type projected on a display in the wheelhouse, for example by means of a GPS receiver. The map shows a river 40 on which the ship 2 is sailing. A bridge 42 over the river where a road 41 crosses the river is located further along the route of the ship. The road 41 furthermore includes a bridge 43 which routes the road 41 over a road 44. The ship 2 is provided with the device 6 according to the invention which transmits a laser beam within the area 8. In the position of the ship 2 shown in the drawing, the laser beam is directed onto the bridge 43 which is not located along the route of the ship 2. If the height of the bridge 43 is lower than the height of the ship 2, the device 6 will issue a warning via the warning means. The device cannot in fact determine whether the perceived obstacle, the bridge 43, is or is not located along the route of the ship. However, the boatmaster can in fact see on the map that the bridge 43 is not located along the route of the ship. According to a specific preferred embodiment of the invention, the warning signal is fed to a GPS unit which can determine from the position of the ship whether the perceived obstacle is or is not located along the route of the ship. If not, the GPS unit blocks the warning signal so that unnecessary warnings are prevented. It is furthermore also possible that the map is not visible in the wheelhouse and that the map is evaluated electronically by a processor.

Although the above embodiments relate to a ship, it will be clear that the invention can also be applied to a vehicle of a different type, such as a truck. The embodiment explained above is fairly comprehensive; for use with a truck, the dimensions of the device must be reduced.

## Claims

1. Device (6) adapted for placement on a vehicle (2) for warning of obstacles (3) located above the route of the vehicle, comprising:
- a transmitter (23) for transmitting electromagnetic signals propagating in a straight line (8) in a vertical area which extends in the direction of movement of the vehicle (2);
- a receiver (24) for receiving signals reflected by an obstacle (3); and
- computing means (20) connected to the transmitter (23) and to the receiver (24) for determining the presence of the obstacle (3) from a relationship between the transmitted and reflected signals and, in the event of determined presence of the obstacle, determining the height of the underside of the obstacle in relation to the vehicle (2), **characterized in that**
- the transmitter (23) and the receiver (24) are placed together on a platform (14) which is pivotable around a horizontal axle (12) in relation to a base (13) which is to be connected to the vehicle (2),
- the device (6) is provided with a pivoting device (15, 16, 17, 18) for the repeated pivoting of the platform (14) through a limited angle around its axle,
- at least one angle sensor (21) is fitted to determine the pivot angle of the platform (14), and
- the computing means (20) are connected to the angle sensor (21).

2. Device (6) according to claim 1, **characterized in that** the transmitter (23) is configured to transmit signals in the form of signals incorporated into a laser beam (8) and that the receiver (24) is configured to receive laser beams.

3. Device (6) according to claim 1 or 2, **characterized in that** the computing means (20) are configured for the repeated performance of a pivoting movement of the platform (14) and that the computing means are configured to calculate the position of the reflecting obstacle (3) in relation to the ship (2) from the angular position of the transmitter (23) and the distance between the transmitter (23) and the obstacle (3), and that the computing means are configured, following the determination of the presence of an obstacle (3), to increase the pivot angle on approaching the obstacle.

4. Device (6) according to one of claims 1 to 3, **characterized in that** the angle sensor (21) comprises both a gyroscopic sensor (22) placed on the platform (14) and an angle sensor connected to the basis (13), which is configured to measure the angle between the platform and the basis, and that the computing means (24) are configured to combine the signals from the angle sensor (21) and the gyroscopic sensor (22).

5. Device (6) according to one of the preceding claims, **characterized in that** the device is configured to issue a warning signal if the tallest height of the vehicle (2) is taller than the vertical clearance of an obstacle (3) located on the route of the vehicle.

6. Device (6) according to one of the preceding claims, **characterized in that** the device is configured to emit different warning signals depending on the distance between the ship (2) and the bridge (3).

7. Device (6) according to one of the preceding claims, **characterized in that** the device is provided with a GPS unit which is connected to the computing means (24) and the computing means are configured, following the determination of the presence of an obstacle (3), to investigate whether the obstacle (3) is actually located on the route and to issue a warning only if the obstacle is actually located on the route.

8. Device (6) according to claim 7, **characterized in that** the GPS unit is provided with a digital map which is provided with data of obstacles (3) and this device is configured to adapt the data of obstacles.

9. Device (6) according to one of claims 1-8, **characterized in that** the device is configured for placement on a ship (2), in particular a barge, and that the device is configured to determine the vertical clearance of bridges (3).

10. Ship (2) according to claim 9, which is provided with a wheelhouse (4) placed on a variable-height support, **characterized in that** the wheelhouse (4) is provided with a position sensor to measure the height of the wheelhouse, the position sensor is connected to computing means (24) and the computing means are configured to measure the height of the wheelhouse (4).

11. Method for determining the presence and the position of obstacles (3) located above the route of a vehicle (2) and for warning of said obstacles, comprising the transmission of an electromagnetic signal propagating in a straight line (8) in a vertical area which extends in the direction of movement of the vehicle (2), the reception of a signal reflected by the obstacles (3) and the determination of the presence of an obstacle from the relationship between the transmitted and a reflected signal and, in the event of determined presence of the obstacle (3), determination of the height of the obstacle in relation to the vehicle (2), **characterized in that** the transmitter (23) and the receiver (24) together perform a pivoting movement around a horizontal axle (12),
said pivoting movement is repeated through a limited range, and
the pivot angle is determined.

12. Method according to claim 11, **characterized in that**, following the determination of the presence of an obstacle (3), the pivot angle is increased on approaching the obstacle.

13. Method according to claim 11 or 12, **characterized in that** the position of the transmitter (23) and the receiver (24) is determined during the transmission and reception of the electromagnetic signals by two position sensors (21, 22) and the signals originating from both sensors are combined.

14. Method according to claim 11, 12 or 13, **characterized in that**, following the determination of the presence of an obstacle (3), it is investigated with reference to a digital map whether the obstacle (3) is actually located on the route and a warning is issued only if the obstacle is actually located on the route.

## Patentansprüche

1. Vorrichtung (6), die für Anordnung auf einem Fahrzeug (2) ausgelegt ist, zur Warnung über Hindernisse (3), die sich über den Weg des Fahrzeugs befinden, umfassend:
- einen Sender (23) zum Senden von elektromagnetischen Signalen, die sich in einer geraden Linie (8) in einem vertikalen Bereich ausbreiten, der sich in der Bewegungsrichtung des Fahrzeugs (2) erstreckt;
- einen Empfänger (24) zum Empfangen von durch ein Hindernis (3) reflektierten Signalen; und
- mit dem Sender (23) und dem Empfänger (24) verbundene Datenverarbeitungsmittel (20) zur Bestimmung der Anwesenheit des Hindernisses (3) aus einer Beziehung zwischen den gesendeten und reflektierten Signalen und im Fall bestimmter Anwesenheit des Hindernisses Bestimmen der Höhe der Unterseite des Hindernisses in Bezug auf das Fahrzeug (2), **dadurch gekennzeichnet, dass**
- der Sender (23) und der Empfänger (24) zusammen auf einer Plattform (14) angeordnet sind, die um eine Horizontalachse (12) in Bezug auf eine Basis (13), die mit dem Fahrzeug (2) zu verbinden ist, schwenkbar ist,
- die Vorrichtung (6) mit einer Schwenkvorrichtung (15, 16, 17, 18) zum wiederholten Schwenken der Plattform (14) um einen begrenzten Winkel um ihre Achse herum ausgestattet ist,
- mindestens ein Winkelsensor (21) angebracht ist, um den Schwenkwinkel der Plattform (14) zu bestimmen, und
- die Datenverarbeitungsmittel (20) mit dem Winkelsensor (21) verbunden sind.

2. Vorrichtung (6) nach Anspruch 1, **dadurch gekennzeichnet, dass** der Sender (23) dafür ausgelegt ist, Signale in Form von in einen Laserstrahl (8) aufgenommenen Signalen zu senden, und dass der Empfänger (24) dafür ausgelegt ist, Laserstrahlen zu empfangen.

3. Vorrichtung (6) nach Anspruch 1 oder 2, **dadurch gekennzeichnet, dass** die Datenverarbeitungsmittel (20) für wiederholte Durchführung einer Schwenkbewegung der Plattform (14) ausgelegt sind und dass die Datenverarbeitungsmittel dafür ausgelegt sind, die Position des reflektierenden Hindernisses (3) in Bezug auf das Schiff (2) aus der Winkelposition des Senders (23) und dem Abstand zwischen dem Sender (23) und dem Hindernis (3) zu berechnen, und dass die Datenverarbeitungsmittel dafür ausgelegt sind, nach der Bestimmung der Anwesenheit eines Hindernisses (3) den Schwenkwinkel bei der Annäherung an das Hindernis zu vergrößern.

4. Vorrichtung (6) nach einem der Ansprüche 1 bis 3, **dadurch gekennzeichnet, dass** der Winkelsensor (21) sowohl einen auf der Plattform (14) angeordneten Kreiselsensor (22) als auch einen mit der Basis (13) verbundenen Winkelsensor umfasst, der dafür ausgelegt ist, den Winkel zwischen der Plattform und der Basis zu messen, und dass die Datenverarbeitungsmittel (24) dafür ausgelegt sind, die Signale von dem Winkelsensor (21) und dem Kreiselsensor (22) zu kombinieren.

5. Vorrichtung (6) nach einem der vorhergehenden Ansprüche, **dadurch gekennzeichnet, dass** die Vorrichtung dafür ausgelegt ist, ein Warnsignal auszugeben, wenn die höchste Höhe des Fahrzeugs (2) höher als der vertikale Freiraum eines auf der Route des Fahrzeugs befindlichen Hindernisses (3) ist.

6. Vorrichtung (6) nach einem der vorhergehenden Ansprüche, **dadurch gekennzeichnet, dass** die Vorrichtung dafür ausgelegt ist, abhängig von dem Abstand zwischen dem Schiff (2) und der Brücke (3) verschiedene Warnsignale zu emittieren.

7. Vorrichtung (6) nach einem der vorhergehenden Ansprüche, **dadurch gekennzeichnet, dass** die Vorrichtung mit einer GPS-Einheit ausgestattet ist, die mit den Datenverarbeitungsmitteln (24) verbunden ist, und die Datenverarbeitungsmittel dafür ausgelegt sind, nach der Bestimmung der Anwesenheit eines Hindernisses (3) zu untersuchen, ob sich das Hindernis (3) tatsächlich auf der Route befindet, und eine Warnung nur dann auszugeben, wenn sich das Hindernis tatsächlich auf der Route befindet.

8. Vorrichtung (6) nach Anspruch 7, **dadurch gekennzeichnet, dass** die GPS-Einheit mit einer digitalen Karte ausgestattet ist, die mit Daten von Hindernissen (3) ausgestattet ist, und diese Vorrichtung dafür ausgelegt ist, die Daten von Hindernissen anzupassen.

9. Vorrichtung (6) nach einem der Ansprüche 1-8, **dadurch gekennzeichnet, dass** die Vorrichtung für die Platzierung auf einem Schiff (2), insbesondere einem Binnenschiff, ausgelegt ist und dass die Vorrichtung dafür ausgelegt ist, den vertikalen Freiraum von Brücken (3) zu bestimmen.

10. Schiff (2) nach Anspruch 9, das mit einem Steuerhaus (4) ausgestattet ist, das auf einer Halterung variabler Höhe angeordnet ist, **dadurch gekennzeichnet, dass** das Steuerhaus (4) mit einem Positionssensor ausgestattet ist, um die Höhe des Steuerhauses zu messen, der Positionssensor mit den Datenverarbeitungsmitteln (24) verbunden ist und die Datenverarbeitungsmittel dafür ausgelegt sind, die Höhe des Steuerhauses (4) zu messen.

11. Verfahren zur Bestimmung der Anwesenheit und der Position von Hindernissen (3), die sich über der Route eines Fahrzeugs (2) befinden, und zum Warnen vor den Hindernissen, umfassend: Übertragung eines elektromagnetischen Signals, das sich in einer geraden Linie (8) in einem vertikalen Bereich ausbreitet, der sich in der Bewegungsrichtung des Fahrzeugs (2) erstreckt, Empfang eines durch die Hindernisse (3) reflektierten Signals und Bestimmung der Anwesenheit eines Hindernisses aus der Beziehung zwischen dem gesendeten und einem reflektierten Signal und im Fall bestimmter Anwesenheit des Hindernisses (3), Bestimmung der Höhe des Hindernisses in Bezug auf das Fahrzeug (2), **dadurch gekennzeichnet, dass** der Sender (23) und der Empfänger (24) zusammen eine Schwenkbewegung um eine Horizontalachse (12) herum durchführen,
die Schwenkbewegung um ein begrenztes Ausmaß wiederholt wird und
der Schwenkwinkel bestimmt wird.

12. Verfahren nach Anspruch 11, **dadurch gekennzeichnet, dass** nach der Bestimmung der Anwesenheit eines Hindernisses (3) der Schwenkwinkel bei der Annäherung an das Hindernis vergrößert wird.

13. Verfahren nach Anspruch 11 oder 12, **dadurch gekennzeichnet, dass** die Position des Senders (23) und des Empfängers (24) während des Sendens und Empfangens der elektromagnetischen Signale durch zwei Positionssensoren (21, 22) bestimmt wird und die von beiden Sensoren stammenden Signale kombiniert werden.

14. Verfahren nach Anspruch 11, 12 oder 13, **dadurch gekennzeichnet, dass** nach der Bestimmung der Anwesenheit eines Hindernisses (3) mit Bezug auf eine digitale Karte untersucht wird, ob sich das Hindernis (3) tatsächlich auf der Route befindet, und eine Warnung nur dann ausgegeben wird, wenn sich das Hindernis tatsächlich auf der Route befindet.

## Revendications

1. Dispositif (6) conçu pour être placé sur un véhicule (2) pour avertir de la présence d'obstacles (3) situés au-dessus de l'itinéraire du véhicule, comprenant :
un émetteur (23) pour transmettre des signaux électromagnétiques se propageant en ligne droite (8) dans une zone verticale qui s'étend dans la direction de déplacement du véhicule (2) ;
un récepteur (24) pour recevoir des signaux réfléchis par un obstacle (3) ; et
un moyen de calcul (20) connecté à l'émetteur (23) et au récepteur (24) pour déterminer la présence de l'obstacle (3) à partir d'une relation entre les signaux transmis et réfléchis et, en cas de présence déterminée de l'obstacle, déterminer la hauteur de la face inférieure de l'obstacle par rapport au véhicule (2), **caractérisé en ce que**
l'émetteur (23) et le récepteur (24) sont placés ensemble sur une plate-forme (14) qui peut pivoter autour d'un axe horizontal (12) par rapport à une base (13) qui doit être reliée au véhicule (2),
le dispositif (6) comprend un dispositif pivotant (15, 16, 17, 18) pour le pivotement répété de la plate-forme (14) sur un angle limité autour de son axe,
au moins un capteur d'angle (21) est monté pour déterminer l'angle de pivotement de la plate-forme (14), et
le moyen de calcul (20) est connecté au capteur d'angle (21).

2. Dispositif (6) selon la revendication 1, **caractérisé en ce que** l'émetteur (23) est conçu pour transmettre des signaux sous la forme de signaux incorporés dans un faisceau laser (8) et **en ce que** le récepteur (24) est conçu pour recevoir des faisceaux laser.

3. Dispositif (6) selon la revendication 1 ou 2, **caractérisé en ce que** le moyen de calcul (20) est conçu pour l'exécution répétée d'un mouvement de pivotement de la plate-forme (14) et **en ce que** le moyen de calcul est conçu pour calculer la position de l'obstacle réfléchissant (3) par rapport au navire (2) à partir de la position angulaire de l'émetteur (23) et de la distance entre l'émetteur (23) et l'obstacle (3), et **en ce que** le moyen de calcul est conçu, après la détermination de la présence d'un obstacle (3), pour augmenter l'angle de pivotement à l'approche de l'obstacle.

4. Dispositif (6) selon l'une des revendications 1 à 3, **caractérisé en ce que** le capteur d'angle (21) comprend à la fois un capteur gyroscopique (22) placé sur la plate-forme (14) et un capteur d'angle connecté à la base (13), qui est conçu pour mesurer l'angle entre la plate-forme et la base, et **en ce que** le moyen de calcul (24) est conçu pour combiner les signaux du capteur d'angle (21) et du capteur gyroscopique (22).

5. Dispositif (6) selon l'une des revendications précédentes, **caractérisé en ce que** le dispositif est conçu pour émettre un signal d'avertissement si la hauteur maximale du véhicule (2) est supérieure à l'espace libre vertical d'un obstacle (3) situé sur l'itinéraire du véhicule.

6. Dispositif (6) selon l'une des revendications précédentes, **caractérisé en ce que** le dispositif est conçu pour émettre différents signaux d'avertissement en fonction de la distance entre le navire (2) et le pont (3).

7. Dispositif (6) selon l'une des revendications précédentes, **caractérisé en ce que** le dispositif comprend une unité GPS qui est connectée au moyen de calcul (24) et le moyen de calcul est configuré pour, à la suite de la détermination de la présence d'un obstacle (3), rechercher si l'obstacle (3) est effectivement situé sur l'itinéraire et pour émettre un avertissement seulement si l'obstacle est effectivement situé sur l'itinéraire.

8. Dispositif (6) selon la revendication 7, **caractérisé en ce que** l'unité GPS comprend une carte numérique qui comprend des données d'obstacles (3) et **en ce que** ce dispositif est conçu pour adapter les données d'obstacles.

9. Dispositif (6) selon l'une des revendications 1 à 8, **caractérisé en ce que** le dispositif est conçu pour être placé sur un navire (2), en particulier une barge, et **en ce que** le dispositif est conçu pour déterminer l'espace libre vertical des ponts (3).

10. Navire (2) selon la revendication 9, qui comprend une timonerie (4) placée sur un support à hauteur variable, **caractérisé en ce que** la timonerie (4) comprend un capteur de position pour mesurer la hauteur de la timonerie, le capteur de position est connecté à un moyen de calcul (24) et le moyen de calcul est conçu pour mesurer la hauteur de la timonerie (4).

11. Procédé pour déterminer la présence et la position d'obstacles (3) situés au-dessus de l'itinéraire d'un véhicule (2) et pour avertir de la présence desdits obstacles, comprenant les étapes consistant à transmettre un signal électromagnétique se propageant en ligne droite (8) dans une zone verticale qui s'étend dans la direction de déplacement du véhicule (2), à recevoir un signal réfléchi par les obstacles (3) et à déterminer la présence d'un obstacle à partir de la relation entre le signal transmis et un signal réfléchi et, en cas de présence déterminée de l'obstacle (3), à déterminer la hauteur de l'obstacle par rapport au véhicule (2),
**caractérisé en ce que** l'émetteur (23) et le récepteur (24) effectuent ensemble un mouvement pivotant autour d'un axe horizontal (12),
ledit mouvement de pivotement est répété sur une plage limitée, et
l'angle de pivotement est déterminé.

12. Procédé selon la revendication 11, **caractérisé en ce que**, à la suite de la détermination de la présence d'un obstacle (3), l'angle de pivotement est augmenté à l'approche de l'obstacle.

13. Procédé selon la revendication 11 ou 12, **caractérisé en ce que** la position de l'émetteur (23) et du récepteur (24) est déterminée pendant la transmission et la réception des signaux électromagnétiques par deux capteurs de position (21, 22) et les signaux provenant des deux capteurs sont combinés.

14. Procédé selon la revendication 11, 12 ou 13, **caractérisé en ce que**, à la suite de la détermination de la présence d'un obstacle (3), il est examiné par référence à une carte numérique si l'obstacle (3) est effectivement situé sur l'itinéraire et un avertissement n'est émis que si l'obstacle est effectivement situé sur l'itinéraire.
